# EUROPEAN PATENT APPLICATION

(11) **EP 1 793 585 A2**
(43) Date of publication of application: **06.06.2007**
(21) Application number: 06125073.4
(22) Date of filing: 30.11.2006
(51) Int. Cl.: H04N 5/00, H04B 3/54, H04L 12/28

(54) **Digital satellite broadcasting set-top box, and home network control system employing the same**

(30) Priority: 01.12.2005 KR 20050116049; 25.07.2006 KR 20060069950
(71) Applicant: ELECTRONICS AND TELECOMMUNICATIONS RESEARCH INSTITUTE, Daejeon 305-350 (KR)
(72) Inventor: Choi, Eun-A, Yuseong-gu, Daejon 305-802 (KR); Kim, Nae-Soo, Daejon 306-060 (KR); Chang, Dae-Ig, Daejon 302-280 (KR); Oh, Deock-Gil, Daejon 302-120 (KR)
(74) Representative: Betten & Resch

(57) **Abstract**

Provided is a digital satellite broadcasting set-top box and a home network control system employing the same. The set-top box includes: a satellite signal receiving unit for receiving a satellite signal including a home network control signal for controlling the household appliances through a satellite broadcasting network from a remote terminal; and a control unit for extracting a household appliances control signal included in the satellite signal transmitted from the satellite signal receiving unit and commanding a power line converter to transmit the household appliances control signal to a corresponding household appliance, wherein the power line converter converts the household appliances control signal transmitted from the digital satellite broadcasting 9 set-top box into a power line communication signal and transmits the power line communication signal on the home network through a power line.

## Description

### Field of the Invention

The present invention relates to a digital satellite broadcasting set-top box and a home network control system employing the same; and, more particularly, to a digital satellite broadcasting set-top box that can Contribute to establishing an efficient home network control system with a minimal cost by realizing a home server function in a digital satellite broadcasting set-top box and a function for converting and transmitting a home network control signal transmitted from the digital satellite broadcasting set-top box into a power line communication signal through a power line converter, and a home network control system and method using the same.

### Description of Related Art

A digital satellite broadcasting set-top box means a digital satellite broadcasting reception terminal set including a demodulator, a channel decoder, a mode deadaptor, and a control processor having a modem function for receiving digital satellite broadcasting in conformity to a standard established by digital video broadcasting (DVB), which is a European international standard. The digital satellite broadcasting reception terminal set needs to be set up to receive satellite broadcasting. The digital satellite broadcasting set-top box includes a satellite broadcasting standard DVB-S and DVB-S2 which are being broadcasted in Korea.

Also, a home network control system, i.e., a home server, functions as a connector for gathering diverse information of household appliances or information devices, and connecting the diverse information to an external communication network. That is, the home network control system means a system for controlling all household appliances and information devices in the inside and outside of a house.

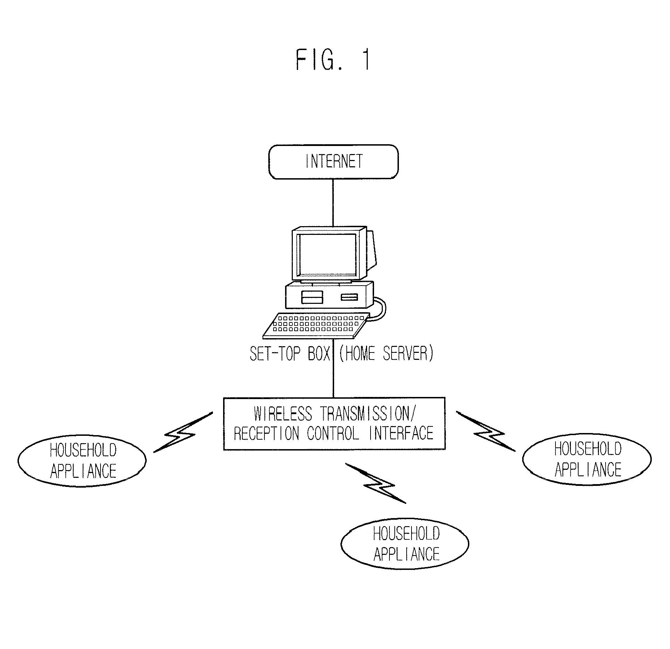

As shown in Fig. 1, a current home server is realized in a form of the set-top box or diverse forms such as a digital television, a refrigerator, an audio and a private server for home network, i.e., a Personal Computer (PC).

The home server should cost less, be easily set up and connected to devices in the inside of the home network.

The set-top box and the private server for home network generally used as a home network control device require purchase of an individual equipment and are very expensive.

Therefore, a method for establishing an efficient home server system with a minimal cost by realizing a home server function in the generally used digital satellite broadcasting set-top box and by using moderate power line communication (PLC), which can be easily transferred and set up, as a control interface, is required.

### Summary of the Invention

It is, therefore, an object of the present invention to provide a digital satellite broadcasting set-top box that can contribute to establishing an efficient home network control system with a minimal cost by realizing a home server function in a digital satellite broadcasting set-top box and a function for converting and transmitting a home network control signal transmitted from the digital satellite broadcasting set-top box into a power line communication signal through a power line converter, and a home network control system and method employing the set-top box.

Other objects and advantages of the invention will be understood by the following description and become more apparent from the embodiments in accordance with the present invention, which are set forth hereinafter. It will be also apparent that objects and advantages of the invention can be embodied easily by the means defined in claims and combinations thereof.

In accordance with an aspect of the present invention, there is provided a digital satellite broadcasting set-top box for controlling household appliances on a a home network realized through a power line in a house, the set-top box including: a satellite signal receiving unit for receiving a satellite signal including a home network control signal for controlling the household appliances through a satellite broadcasting network from a remote terminal; and a control unit for extracting a household appliances control signal included in the satellite signal transmitted from the satellite signal receiving unit and commanding a power line converter to transmit the household appliances control signal to a corresponding household appliance, wherein the power line converter converts the household appliances control signal transmitted from the digital satellite broadcasting set-top box into a power line communication signal and transmits the power line communication signal on the home network through a power line.

In accordance with another aspect of the present invention, there is provided a home network control system controlling household appliances on a home network realized through a power line in a house, the system including: a digital satellite broadcasting set-top box for extracting a home network control signal for controlling the household appliances included in a satellite signal transmitted from a remote terminal through a satellite broadcasting network and commanding a power line converter to transmit the household appliances control signal to a corresponding household appliance; and a power line converter for converting the household appliances control signal into a power line communication signal and transmitting the power line communication, signal on the home network through the power line.

In accordance with another aspect of the present invention, there is provided a home network control method using a digital satellite broadcasting set-top box to control household appliances on a home network realized through a power line in a house, the method including the steps of: a) when a remote terminal transmits an access through a satellite broadcasting network, authenticating a user of the remote terminal; b) when the user authentication is successful, requesting the remote terminal to transmit a home network control signal through a satellite broadcasting network; c) when a satellite signal including the household appliances control signal is transmitted from the remote terminal through a satellite broadcasting network as a result of the transmission of the household appliances control signal request, extracting the household appliances control signal from the satellite signal; and d) converting the extracted household appliances control signal into a power line communication signal and transmitting the power line communication signal on the home network through a power line.

In accordance with another aspect of the present invention, there is provided a home network control method using a digital satellite broadcasting set-top box for controlling household appliances on a home network realized through a power line in a house, the method including the steps of: a) when a user requests to control a specific household appliance, authenticating the user; b) when the user authentication is successful, creating the household appliances control signal for controlling 9 the household appliances corresponding to the request of the user; y and c) converting the created household appliances control signal into a power line communication signal and transmitting the power line communication signal on the home network through a power line.

In a general digital satellite broadcasting transmission system, a transmitting station combines broadcasting transmitting signals from diverse broadcasting stations, transmits the broadcasting transmitting signals through a satellite and receives the broadcasting transmitting signals through a satellite antenna owed by each subscriber with the digital satellite broadcasting set-top box. Subsequently, when the digital satellite broadcasting set-top box decodes the transmitted broadcasting signal, the subscriber can watch TV.

A following transmitting method is required to operate the general digital satellite broadcasting set-top box in a mode of functioning as a home gateway and a home server while the general digital satellite broadcasting set-top box operates a main function.

Diverse providers related to a home network formation such as a power provider, security provider and Internet/mobile phone/telephone provider are connected to the transmitting station. Request signals of the subscriber, which are requested from external through each providers or requested by being directly connected to the transmitting station, are combined and transmitted by being loaded in the DVB-S or a DVB-S2 broadcasting/communication frame. In a process of loading the signals in the frame, information of subscribers should be differently coded, respectively. The transmitted signal is transmitted to satellite antennas owed by subscribers having the digital satellite broadcasting reception set-top box through the satellite. In each digital satellite broadcasting reception set-top box, only a corresponding user can receive the signal through a user authenticating process. The received signal is converted into a power line signal by a power line converter to be mounted on the inside or outside of the digital satellite broadcasting reception set-top box, and make it possible to communicate with each of the connected household appliances.

The digital satellite broadcasting set-top box having an interactive communicating function, i.e., a digital video broadcasting-reaction control system (DVB-RCS) function, supported as an option in the DVB-S2 standard can store an error analysis log in the digital satellite broadcasting set-top box based on the signals reversely transmitted from each household appliance. Also, the digital satellite broadcasting set-top box can transmit information to the transmitting station, each provider and subscribers by using the RCS function and through the satellite.

### Brief Description of the Drawings

The above and other objects and features of the present invention will become apparent from the following description of the preferred embodiments given in conjunction with the accompanying drawings, in which:
Fig. 1 shows a home subsystem using a conventional set-top box;
Fig. 2 is a block diagram showing a home network control system using a digital satellite broadcasting set-top box in accordance with an embodiment of the present invention;
Fig. 3 is a block diagram illustrating the digital satellite broadcasting set-top box in accordance with the embodiment of the present invention;
Fig. 4 is a block diagram illustrating a power line converter of the home network control system in accordance with the embodiment of the present invention;
Fig. 5 is a flowchart describing a home network control method using a digital satellite broadcasting set-top box in accordance with an embodiment of the present invention; and
Fig. 6 is a flowchart describing the home network control method using the digital satellite broadcasting set-top box in accordance with another embodiment of the present invention.

### Detailed Description of the Invention

Other objects and advantages of the present invention will 1 become apparent from the following description of the embodiments with reference to the accompanying drawings. Therefore, those skilled in the art of the present invention can embody the technological concept and scope of the invention easily. In addition, if it is considered that detailed description on a related art may obscure the points of the present invention, the detailed description will not be provided herein. The preferred embodiments of the present invention will be described in detail hereinafter with reference to the attached drawings.

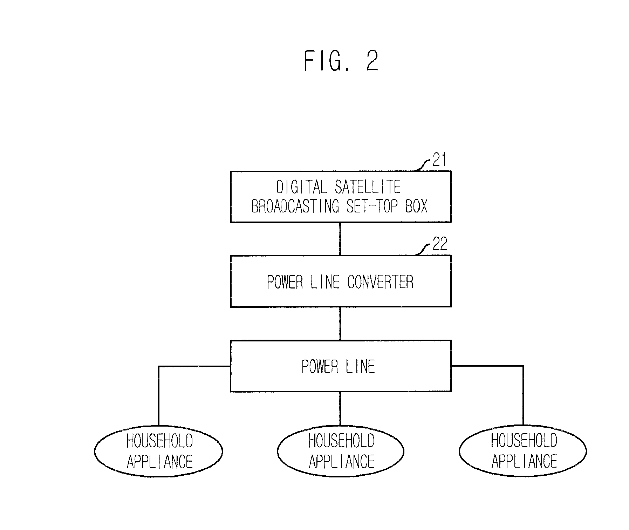

Fig. 2 is a block diagram showing a home network control system using a digital satellite broadcasting set-top box in accordance with an embodiment of the present invention.

The home network control system using the digital satellite broadcasting set-top box of the present invention includes a digital satellite broadcasting set-top box 21 and a power line converter 22. The power line converter 22 can be mounted in the inside of the digital satellite broadcasting set-top box 21 or connected to the outside of the digital satellite broadcasting set-top box 21.

The digital satellite broadcasting set-top box 21 transmits a home network control signal selected by menu selection of the user to the power line converter 22 and transmits the home network control signal corresponding to the control signal from a remote region to the power line converter 22 in a home server mode.

The digital satellite broadcasting set-top box 21 can directly control household appliances or information devices in the inside of the home network by the menu selection in a state that the digital satellite broadcasting set-top box 21 is connected to the power line converter 22. Also, the digital satellite broadcasting set-top box 21 can control household appliances or information devices in the inside of the home network by a control signal from a wired/wireless terminal of the remote region capable of communication through the satellite communication broadcasting network.

The power line converter 22 converts the home network control signal transmitted from the digital satellite broadcasting set-top box 21 into a power line communication signal, transmits the power line communication signal through a power line and controls a corresponding device of the home network. The home network control signal means a signal for controlling household appliances.

The power line communication signal transmitted through the power line converter 22 is broadcasted as the household appliances or the information devices in the inside of the home network through the power line. Subsequently, each household appliance or information device analyzes the power line communication signal based on a power line communication module and executes a corresponding function.

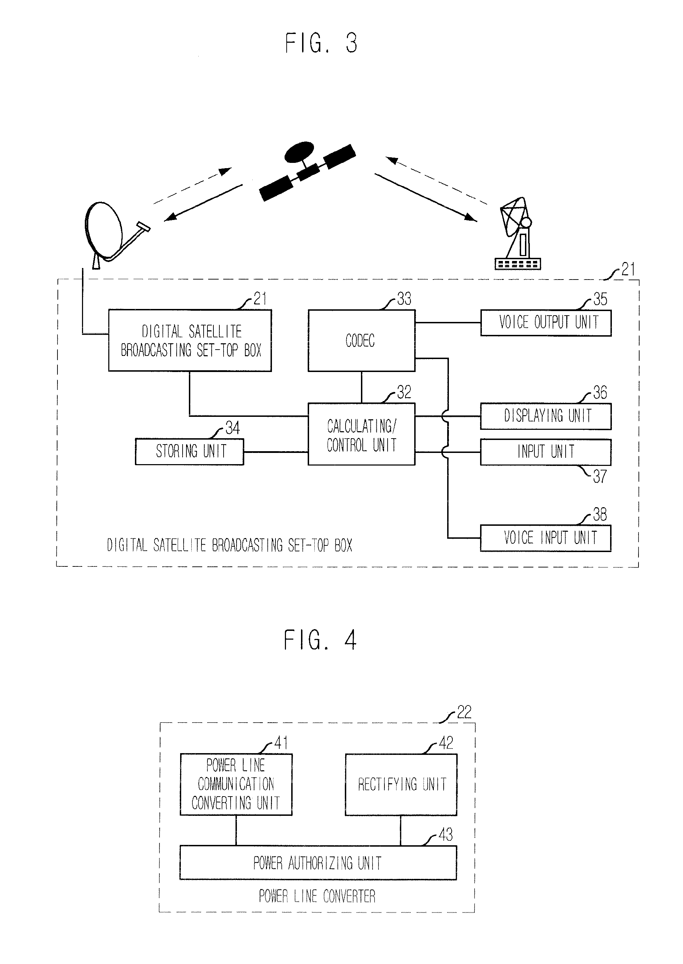

Fig. 3 is a block diagram illustrating the digital satellite broadcasting set-top box in accordance with the embodiment of the present invention.

The digital satellite broadcasting set-top box of the present invention includes a digital satellite broadcasting transmitting/receiving unit 31, a calculating/control unit 32, a coder/decoder (CODEC) 33, a storing unit 34, a voice output unit 35, a displaying unit 36, an input unit 37 and a voice input unit.

The digital satellite broadcasting transmitting/receiving unit 31 wirelessly transmits/receives a signal through a satellite antenna. The calculating/control unit 32 drives and controls the digital satellite broadcasting set-top box 21, and transmits a home network control signal corresponding to the home network control signal transmitted from the input unit 37 and/or the remote control signal transmitted from the remote region through the satellite communication broadcasting network in a home server mode to the power line converter 22.

The calculating/control unit 32 recognizes the remote control signal transmitted from the remote region through the satellite communication broadcasting network and converts the remote control signal into a corresponding home network control signal. The CODEC 33 converts the signal transmitted from a digital satellite broadcasting set-top box 11 into voice according to a control signal of the calculating/control unit 32, outputs the voice to the voice output unit 35, e.g., a speaker, converts the voice transmitted from the voice input unit into a signal, transmits the signal to the calculating/control unit 32 to emit the signal through the digital satellite broadcasti-ng set-top box 31.

The storing unit 34 stores a program file for driving the digital satellite broadcasting set-top box 31, a file system such as an image, a character and am icon and a home network control program. The voice output unit 35 outputs the voice transmitted from the CODEC 33. The displaying unit 36, e.g., Liquid Crystal Display (LCD), outputs a menu selection screen by control of the calculating/control unit 32. The input unit 37, e.g., a keypad, receives a telephone number, menu selection information, a home network control signal, and a home network control mode setup request signal through a button. The voice input unit receives the voice and transmits the voice to the CODEC 33.

When the digital satellite broadcasting set-top box 21 of the present invention includes only the calculating/control unit 32, the input unit 37, the storing unit 34 and the displaying unit 36 among constitutional elements, the digital satellite broadcasting set-top box 21 can control a home network by menu selection.

When a voice guidance service including the voice output unit 35 is provided, the displaying unit 36 is not necessarily required.

When the digital satellite broadcasting set-top box 21 further includes the digital satellite broadcasting transmitting/receiving unit 31 in addition to the calculating/control unit 32, the input unit 37, the storing unit 34, and the displaying unit 36, the digital satellite broadcasting set-top box 21 can control home network by the menu selection and the remote control signal from a remote region terminal through a satellite communication network.

Also, when a television is connected, the digital satellite broadcasting set-top box 21 can execute a home network control function and general digital satellite broadcasting set-top box functions, i.e., a communication broadcasting function.

Fig. 4 is a block diagram illustrating a power line converter of the home network control system in accordance with the embodiment of the present invention. The power line converter can be mounted to the inside or outside of the digital satellite broadcasting set-top box 21.

The power line converter of the present invention includes a power line communication converting unit 41, a rectifying unit 42 and a power authorizing unit 43.

The power line communication converting unit 41 converts the home network control signal transmitted from the digital satellite broadcasting set-top box 21 into a power line communication signal and transmits the power line communication signal to the power authorizing unit 43. The rectifying unit 42 converts alternating current transmitted from the power authorizing unit 43 into direct current and transmits the direct current to a feeding equipment of the digital satellite broadcasting set-top box 21. The power authorizing unit 43 transmits the alternating current transmitted through the power line to the rectifying unit 42 and transmits the power line communication signal transmitted from the power line communication converting unit 41 to a corresponding device of the home network through the power line.

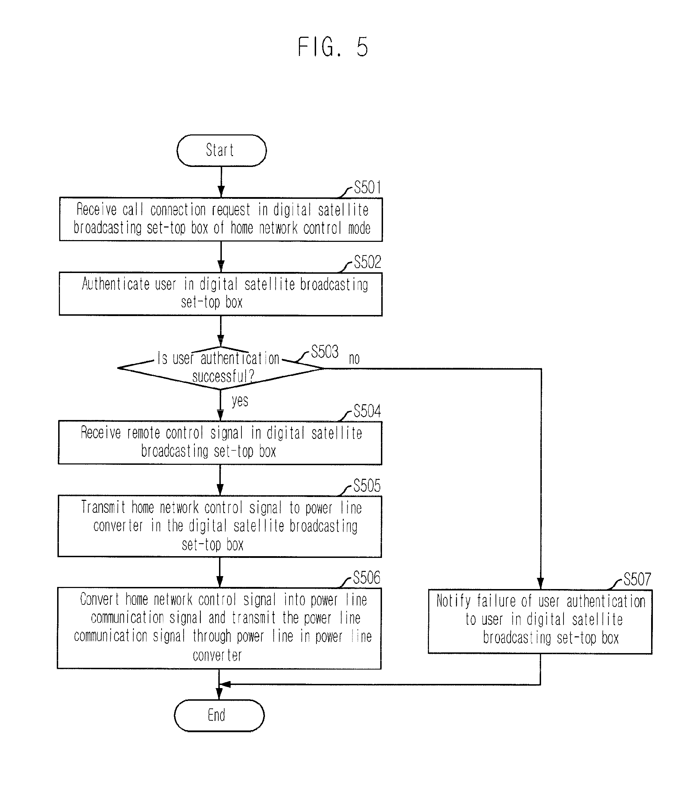

Fig. 5 is a flowchart describing a home network control method using a digital satellite broadcasting set-top box in accordance with an embodiment of the present invention.

When the digital satellite broadcasting set-top box 21 receives a call connection request from the remote region terminal in a home network control mode at step S501, the digital satellite broadcasting set-top box 21 outputs guide information, receives a password and authenticates a user at step S502. Subsequently, the digital satellite broadcasting set-top box 21 checks whether the user authentication is successful at step S503.

When the user authentication is successful at step S503, the digital satellite broadcasting set-top box 21 outputs guide information on a home network control and receives a remote control signal at step S504. Subsequently, the digital satellite broadcasting set-top box 21 recognizes the inputted remote control signal, converts the remote control signal into a corresponding home network control signal and transmits the home network control signal to the power line converter 22 at step S505.

The power line converter 22 controls the corresponding device of the home network by converting the home network control signal transmitted from the digital satellite broadcasting set-top box 21 into a power line communication signal and transmitting the power line communication signal through the power line at step S506. The steps S504 to S506 are repeatedly processed until completion of the call to control diverse devices of the home network.

Meanwhile, when the user authentication is not successful at step S503, the digital satellite broadcasting set-top box notifies failure of the user authentication to the user at step S507.

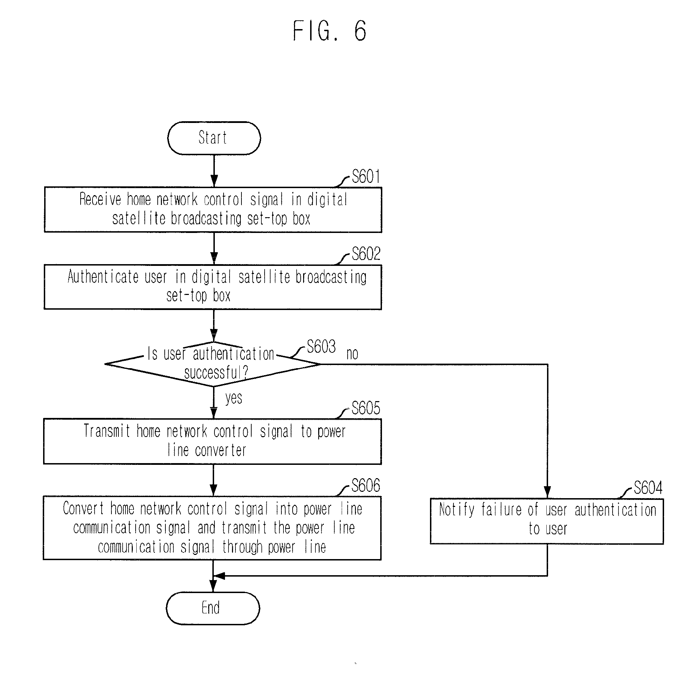

Fig. 6 is a flowchart describing the home network control method using the digital satellite broadcasting set-top box in accordance with another embodiment of the present invention.

When the calculating/control unit 32 of the digital satellite broadcasting set-top box 21 receives a home network control signal directly from a user through the input unit 37 at step S601, the digital satellite broadcasting set-top box 21 additionally receives a password from the user and authenticates the user at step S602. Subsequently, the digital satellite broadcasting set-top box 21 checks whether the user authentication is successful at step S603.

When the user authentication is successful at step S603, the digital satellite broadcasting set-top box 21 transmits the home network control signal inputted through the input unit 37 to the power line converter 22 at step S605.

The power line converter 22 controls s a corresponding device of the home network by converting the home network control signal transmitted from the digital satellite broadcasting set-tap box 21 into a power line communication signal and transmitting the power line communication signal through the power line at step S606.

Meanwhile, when the user authentication is not successful at step S603, the digital satellite broadcasting set-top box notifies the failure of the user authentication to the user at step S604.

The present invention can establish an efficient home network control system with a minimal cost by realizing a home server function in the digital satellite broadcasting set-top box and a function for converting the home network control signal of the digital satellite broadcasting set-top box into the power line communication signal in the power line converter and transmitting the power line communication signal.

As described in detail, the technology of the present invention can be realized as a program and stored in a computer-readable recording medium, such as CD-ROM, RAM, ROM, a floppy disk, a hard disk and a magneto-optical disk. Since the process can be easily implemented by those skilled in the art of the present invention, further description will not be provided herein.

The present application contains subject matter related to Korean patent applications No. 2005-0116049 and No. 2006-0069950 filed with the Korean Intellectual Property Office on December 1, 2005 and July 25, 2000, the entire contents of which are incorporated herein by reference.

While the present invention has been described with respect to certain preferred embodiments, it will be apparent to those skilled in the art that various changes and modifications may be made without departing from the scope of the invention as defined in the following claims.

## Claims

1. A digital satellite broadcasting set-top box for controlling household appliances on a home network realized through a power line in a house, comprising:
a satellite signal receiving means for receiving a satellite signal including a home network control signal for controlling the household appliances through a satellite broadcasting network from a remote terminal; and
a control means for extracting a household appliances control signal included in the satellite signal transmitted from the satellite signal receiving means and commanding a power line converter to transmit the household appliances control signal to a corresponding household appliance,
wherein the power line converter converts the household appliances control signal transmitted from the digital satellite broadcasting set-top box into a power line communication signal and transmits the power line communication signal on a home network through a power line.

2. The set-top box as recited in claim 1, further comprising:
an input means for receiving the home network control signal for controlling the household appliances from a home user,
wherein the control means of the digital satellite broadcasting set-top box commands the power line converter to transmit the household appliances control signal to the household appliance.

3. The set-top box as recited in claim 1 or 2, further comprising:
a satellite signal transmitting means for transmitting a specific satellite signal to a remote terminal through a satellite broadcasting network,
wherein the control means of the digital satellite broadcasting set-top box transmits a control operation response signal transmitted from the household appliance through the power line converter as a result of the household appliances control signal transmission command to the remote terminal through the satellite signal transmitting means.

4. The set-top box as recited in one of claims 1 to 3, wherein the power line converter is realized in any one between a form integrated with the digital satellite broadcasting set-top box and a form connected to the digital satellite broadcasting set-top box through an interface.

5. A home network control system controlling household appliances on a home network realized through a power line in a house, comprising:
a digital satellite broadcasting set-top box for extracting a home network control signal for controlling the household appliances included in a satellite signal transmitted from a remote terminal through a satellite broadcasting network and commanding a power line converter to transmit the household appliances control signal to a corresponding household appliance; and
a power line converter for converting the household appliances control signal into a power line communication signal and transmitting the power line communication signal on the home network through the power line.

6. The system as recited in claim 5, further comprising:
a satellite signal receiving means for receiving a satellite signal including the household appliances control signal through a satellite broadcasting network from a remote terminal; and
a control means for extracting the household appliances control signal included in the satellite signal and commanding the power line converter to transmit the household appliances control signal to the corresponding household appliance.

7. A home network control method using a digital satellite broadcasting set-top box to control household appliances on a home network realized through a power line in a house, comprising the steps of:
a) when a remote terminal transmits an access request through a satellite broadcasting network, authenticating a user of the remote terminal;
b) when the user authentication is successful, requesting the remote terminal to transmit a home network control signal through a satellite broadcasting network;
c) when a satellite signal including the household appliances control signal is transmitted from the remote terminal through a satellite broadcasting network as a result of the transmission of the household appliances control signal request, extracting the household appliances control signal from the satellite signal; and
d) converting the extracted household appliances control signal into a power line communication signal and transmitting the power line communication signal on the home network through a power line.

8. The method as recited in claim 7, further comprising the step of:
e) when a control operation response signal is transmitted from the household appliance as a result of the transmission of the household appliances control signal, loading the control operation response signal in the satellite signal and transmitting the control operation response signal to the remote terminal through the satellite broadcasting network.

9. A home network control method using a digital satellite broadcasting set-top box for controlling household appliances on a home network realized through a power line in the inside of house, comprising the steps of:
a) when a user requests to control a specific household appliance, authenticating the user;
b) when the user authentication is successful, creating the household appliances control signal for controlling the household appliances corresponding to the request of the user; and
c) converting the created household appliances control signal into a power line communication signal and transmitting the power line communication signal on the home network through a power line.
